# EUROPEAN PATENT APPLICATION

(11) **EP 1 737 059 A1**
(43) Date of publication of application: **27.12.2006**
(21) Application number: 06252968.0
(22) Date of filing: 08.06.2006
(51) Int. Cl.: H01M 8/02, H01M 8/24

(54) **Composite sealing structure for sofc modules and stacks and related method**

(30) Priority: 20.06.2005 US 155662
(71) Applicant: General Electronic Company, Schenectady, NY 12345 (US)
(72) Inventor: Weng, Dacong, Rancho Palos Verdes, CA (US); Qi, Xiwang, Torrance, CA 90503 (US); Guan, Jie, Torrance, CA 90503 (US)
(74) Representative: Pedder, James Cuthbert

(57) **Abstract**

A composite sealing structure for a fuel cell stack/module that includes a cell (12) that comprises a cathode (14) and an anode (16) sandwiching a solid electrolyte (18), a cathode-side interconnect (i.e. separator plate) (20) adjacent the cathode (or electrolyte) and an anode-side interconnect (i.e. separator plate) (22) adjacent the anode (or electrolyte), the composite sealing structure comprising a pair of composite sealant structures (28,30) extending about the respective peripheries of the cathode-side and anode-side interconnects, each composite sealant structure comprising a sealing portion (34) interposed between marginal edges of the cathode-side interconnect and the cathode (or electrolyte), and the anode-side interconnect and the anode (or electrolyte), respectively, and an adjacent sealant reservoir portion (36) located outside the respective peripheries for supplying additional sealant (38) to the sealing portion.

## Description

This invention relates generally to a process for manufacturing solid oxide fuel cell stacks and specifically, to a sealing arrangement for preventing leakage of reactants from solid oxide fuel cell modules and stacks at operating temperature.

Sealant for solid oxide fuel cells (SOFC's) require special properties such as a coefficient of thermal expansion to match with the SOFC stack components, a suitable viscosity to fill the seal gaps between cells and interconnects and sustain at the sealing surfaces of the SOFC stack at working temperature, and good thermal and chemical stability.

U.S. Patent Nos. 5,453,331; 6,271,158; 6,541,146; and 6,656,525 disclose various glass-based sealant compositions for solid oxide fuel cells. All of these patents focus only on the composition of sealants that have the necessary properties at SOFC operating temperature, but they have not effectively addressed the desirable characteristics, such as compliance, gap filling, and dimension tolerance in the SOFC seal. Other patents/patent applications, like U.S. 2002/0024185, W02004/010523 and 5,595,833 described sealant concepts using compressive ceramic fibers filled with solid particles; however, these kinds of seals require very high compressive force to achieve low leakage rate, thus introducing a high risk of fracturing the brittle ceramic cells. Therefore, there is an opportunity to use compliant composite structure to improve the capability and stack friendliness of the SOFC sealants.

In accordance with an exemplary embodiment of this invention, a composite sealant structure is disclosed that provides a seal for stacking SOFCs and for preventing standoff between the cells and the interconnects of the SOFC stacks. More specifically, the composite sealant structure includes a sealant to prevent reactant's leakage from SOFC modules and stacks at operating temperature, in combination with an inert matrix formed to include both an edge sealant reservoir portion and a sealing portion.

The inert matrix component of the composite sealing structure may be made of any suitable high temperature resistant materials, such as ceramic fiber/mesh/felt or metal alloy mesh/wools/felt. The sealant itself may be made of any suitable high-temperature-resistant seal material such as glass-ceramic or glass seal. The manufacture of the composite sealant structure may be carried out utilizing any of several known methods such as injection molding, compressive molding, infiltration, and casting.

Accordingly, in one aspect, the present invention relates to a fuel cell composite sealing structure for a fuel cell stack that includes a cell that comprises a cathode and an anode sandwiching a solid electrolyte, a cathode-side interconnect adjacent the cathode and an anode-side interconnect adjacent the anode, the composite sealing structure comprising a pair of composite sealant structures extending about the respective peripheries of the cathode-side and anode-side interconnects, each composite sealant structure comprising a sealing portion interposed between marginal edges of the cathode-side interconnect and the cathode (or the solid electrolyte depending on the cell and stack design), and the anode-side interconnect and the anode (or the solid electrolyte depending on the cell and stack design), respectively, and adjacent sealant reservoir portions located outside the respective peripheries for supplying additional sealant to the sealing portions.

In another aspect, the invention relates to a fuel cell stack comprising plural units stacked on each other, each unit including a cell that comprise a cathode and an anode sandwiching a solid electrolyte, a cathode-side interconnect adjacent the cathode, an anode-side interconnect adjacent the anode, and a pair of composite sealing structures including sealing portions interposed between marginal edges of the cathode-side interconnect and the cathode (or the solid electrolyte depending on the cell and stack design), and the anode-side interconnect and the anode (or the solid electrolyte depending on the cell and stack design), respectively, and an adjacent sealant reservoir portion located outside respective peripheries of the cathode-side and anode-side interconnects for supplying additional sealant to the sealing portion.

In still another aspect, the invention relates to a method of sealing anode and cathode interconnects to a cell that comprises an anode and a cathode sandwiching a solid electrolyte, in a fuel cell module/stack, the method comprising (a) providing a porous sealing structure embedded with sealant between marginal edges of the anode (or electrolyte) and anode-side interconnect, and between marginal edges of the cathode (or electrolyte) and cathode-side interconnect, respectively; and (b) supplying additional sealant as needed to the marginal edge areas.

The invention will now be described in greater detail, by way of example, with reference to the drawings, in which:-
FIGURE 1 is a schematic side view of a single repeat fuel cell unit for a SOFC stack incorporating a composite sealing structure in accordance with an exemplary embodiment of the invention;
FIGURE 2 is an exploded schematic of the components of the composite sealing structure used in Figure 1;
FIGURE 3 is an enlarged detail of a corner of a cell/interconnect interface with a composite sealing structure as shown in Figures 1 and 2.

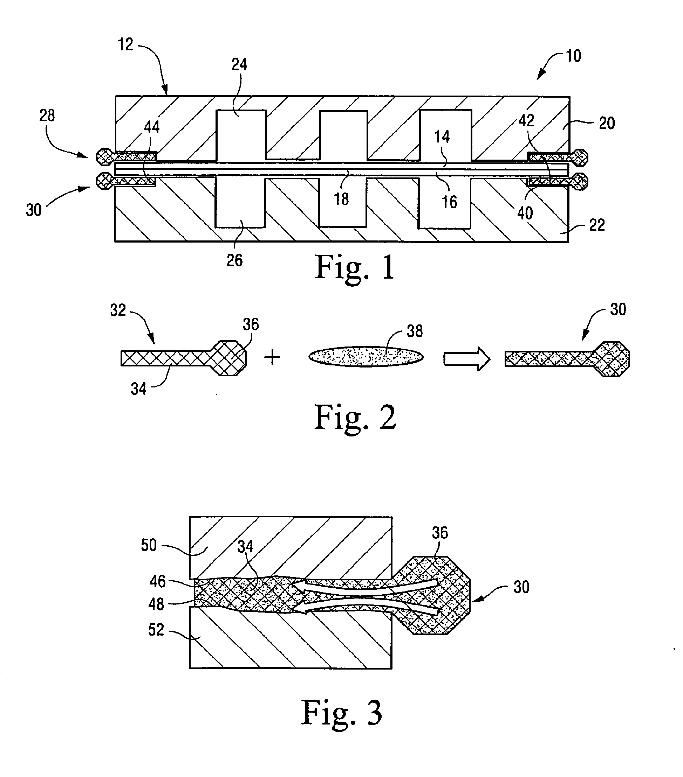

Figure 1 illustrates in schematic form one of plural repeat fuel cell units 10 of a planar, sealed SOFC stack. Each unit 10 includes a fuel cell 12 made up of a cathode 14 and an anode 16 sandwiching a solid electrolyte 18. In addition, a cathode-side interconnect 20 is joined to the cathode 14, and an anode-side interconnect 22 is joined to the anode 16. Interconnects 20 and 22 contain plural passages 24, 26, respectively, for introducing fuel and oxidant gas into the fuel cell. The interfaces between the cathode 14 (or electrolyte 18) and cathode-side interconnect 20, and the anode 16 (or electrolyte 18) and anode-side interconnect 22, respectively, must be sealed to avoid reactants leaking out of the anode and cathode interconnect passages. The above-mentioned interfaces are located about the marginal edges of the respective components.

Composite sealing structures 28, 30 are utilized to seal the above-mentioned interfaces. Since the structures 28, 30 are identical, only one need be described in detail. Thus, structure 30 includes a first inert matrix component 32 formed with a sealing portion 34 (or sealant tape) and an enlarged reservoir portion 36. The inert matrix component 32 is composed of a non-rigid, hollow, porous ceramic/metal alloy material. The second component of the composite sealing structure is the sealant itself. The sealant 38, such as glass ceramic or glass seal in powder or paste form, is embedded within the structure and substantially fills both portions 34 and 36 of the structure. The sealing portion 32 is adapted to be engaged between, for example, the fuel cell anode 16 (or electrolyte 18) and anode-side interconnect 22 as shown in Figure 1, with the reservoir portion 36 located outside the adjacent, respective seal surfaces 40, 42, i.e., beyond the peripheral edge or edges of the interconnects. Further in this regard, Figure 1 illustrates the sealing portion 34 of the sealing structure 30 seated in a recess or cut-out in the marginal area 44 of the interconnect 22. Such recesses are not required however, and the sealing portion 34 may be interposed directly between opposed seal surfaces 46, 48 of a fuel cell anode 50 and an anode-side interconnect 52 as shown in Figure 3. Note that the seal surfaces 46 of the fuel cell anode 50 or 48 of interconnect 52 might be irregular (not flat). Because the structure 30 is compressible, however, the sealing portion 34 will conform to the irregular surface(s) 46 or 48 to enhance sealability. At high, in-use temperatures, the glass sealant will become semi-molten and flow out of the porous sealing portion or sealant tape 34 and into direct contact with the adjacent seal surfaces 46, 48. As the structure conforms to the irregular surface(s) (on the anode, cathode or electrolyte of the fuel cell or on the interconnect surfaces, or both), and as sealant 38 migrates out of the sealing portion 34, additional sealant 38 from the reservoir portion 36 will transfer to the sealing portion or sealing tape 34 by a wicking or capillary action within the inert matrix of the structure, as indicated in Figure 3.

Since the sealant reservoir portion 36 is removed from, i.e., located away from, the seal surfaces 40, 42, 44 or 46, 48, it is possible to make the sealing portion or sealant tape 34 sufficiently thin to accommodate the thickness requirement of anode or cathode bonding materials (not shown) and as such, prevent the standoff between the cells and interconnects caused by the difference between bonding material solidifying temperature and sealant softening temperature. Meanwhile, the sealant reservoir portion 36 is still capable of providing sealant to the seal surfaces 40, 42, 44 or 46, 48 via the inert matrix by a wicking mechanism which provides flexibility to higher geometric tolerance of the cell and interconnects, and consequently, reduces the manufacturing cost and improves the sealability and life of the SOFC stack.

It will be appreciated that the composite sealing structures 28 (and 30) will have a shape corresponding to the shape of the SOFC. For example, the composite sealing structure 28 or 30 may be square, round or rectangular, etc, depending on the shape of the SOFC stack. In any event, the structures 28, 30 are preferably, but need not be, of unitary construction.

## Claims

1. A composite sealing structure for a fuel cell stack that includes a cell (12) having a cathode (14) and an anode (16) sandwiching a solid electrolyte (18), a cathode-side interconnect (20) adjacent said cathode and an anode-side interconnect (22) adjacent said anode, the composite sealing structure comprising a pair of composite sealant structures (28, 30) extending about the respective peripheries of said cathode-side and anode-side interconnects, each composite sealant structure comprising a sealing portion (34) interposed between marginal edges of said cathode-side interconnect and said cathode, and said anode-side interconnect and said anode, respectively, and an adjacent sealant reservoir portion (36) located outside said respective peripheries of said cathode-side and anode-side interconnects for supplying additional sealant (38) to said sealing portion.

2. The composite sealing structure of claim 1 wherein said composite sealant structures are comprised of an inert matrix (32) embedded with a sealant (38).

3. The composite sealing structure of claim 2 wherein said inert matrix (32) comprises a porous ceramic/metal alloy materials.

4. The composite sealing structure of claim 2 wherein said sealant (38) comprises a glass ceramic.

5. The composite sealing structure of claim 2 wherein said sealant (38) comprises a glass.

6. The composite sealing structure of claim 3 wherein said composite sealing structures (28, 30) are substantially hollow.

7. A fuel cell (12) comprising plural units (10) stacked on each other, each unit including a cell that comprises a cathode (14) and an anode (16) sandwiching a solid electrolyte (18), a cathode-side interconnect (20) adjacent said cathode, an anode-side interconnect (22) adjacent said anode, and a pair of composite sealing structures (28, 30) including sealing portions interposed between marginal edges of said cathode-side interconnect and said cathode, and said anode-side interconnect and said anode, respectively, and adjacent sealant reservoir portions (36) located outside respective peripheries of said cathode-side and anode-side interconnects for supplying additional sealant (38) to said sealing portions.

8. The fuel cell of claim 7 wherein said composite sealant structures are comprised of an inert matrix embedded (32) with a sealant.

9. The fuel cell of claim 8 wherein said inert matrix (32) comprises a porous ceramic/metal alloy materials.

10. A method of sealing anode and cathode interconnects (20, 22) to an anode and a cathode, respectively, in a fuel cell (12), the method comprising:
(a) providing a porous sealing structure (28, 30) embedded with sealant (38) between marginal edges of the anode and anode interconnect, and between marginal edges of the cathode and cathode interconnect, respectively; and
(b) supplying additional sealant as needed to said marginal edge areas.
